# EUROPÄISCHE PATENTANMELDUNG

(11) **EP 2 551 217 A1**
(43) Veröffentlichungstag der Anmeldung: **30.01.2013**
(21) Anmeldenummer: 11175600.3
(22) Anmeldetag: 27.07.2011
(51) Int. Cl.: B65G 1/04, B65G 47/54

(54) **Fördervorrichtung für Gegenstände**

(71) Anmelder: Lödige Systems GmbH, 34414 Warburg (DE)
(72) Erfinder: Leichtweiß, Rainer, 34434 Borgentreich (DE)
(74) Vertreter: Ostermann, Thomas

(57) **Zusammenfassung**

Die Erfindung betrifft eine Fördervorrichtung (1) für Gegenstände, insbesondere für (Luftfracht-)Container (2), mit einer Längsfördereinheit (3) zum Fördern der Gegenstände in Längsrichtung (2) auf einer Längsförderbahn, mit einer Verteileinheit (7) zur Umlenkung der Gegenstände von der Längsförderbahn auf eine quer zur Längsförderbahn verlaufende Querförderbahn, wobei die Verteileinheit (7) ein senkrecht zur Längsrichtung (L) und senkrecht zur Querrichtung (Q) verfahrbares Huborgan (26) aufweist, das auf Fördermittel (19) der Verteileinheit (7) derart einwirkt, dass der Gegenstand an einem Verteilplatz (25) in einer unteren Hubstellung in Längsrichtung (2) und in einer oberen Hubstellung in Querrichtung (Q) förderbar ist, wobei die Verteileinheit (7) einen mit dem Fördermittel (19) derselben versehenen Verteilwagen (22) aufweist, der in der unteren Hubstellung der Verteileinheit (7) entlang einer Verfahrbahn (23) verfahrbar und der in der oberen Hubstellung der Verteileinheit (7) an dem Verteilplatz (25) fixiert angeordnet ist.

## Beschreibung

Die Erfindung betrifft eine Fördervorrichtung für Gegenstände, insbesondere für (Luftfracht-)Container, mit einer Längsfördereinheit zum Fördern der Gegenstände in Längsrichtung auf einer Längsförderbahn, mit einer Verteileinheit zur Umlenkung der Gegenstände von der Längsförderbahn auf eine quer zur Längsförderbahn verlaufende Querförderbahn, wobei die Verteileinheit ein senkrecht zur Längsrichtung und senkrecht zur Querrichtung verfahrbares Huborgan aufweist, das auf Fördermittel der Verteileinheit derart einwirkt, dass der Gegenstand an einem Verteilplatz in einer unteren Hubstellung in Längsrichtung und in einer oberen Hubstellung in Querrichtung förderbar ist.

Aus der DE 20 2010 003 868 U1 ist eine Fördervorrichtung für Gepäckstücke bekannt, mittels derer die Gepäckstücke an verschiedenen Punkten innerhalb eines Containers abgelegt werden können. Hierzu weist die Fördervorrichtung ein in Längsrichtung verfahrbares Gestell auf, das zum einen eine Längsfördereinheit zum Befördern der Gegenstände in Längsrichtung und zum anderen eine Verteileinheit zum Befördern der Gegenstände in Querrichtung trägt. Die Verteileinheit weist ein Huborgan auf, mittels dessen Fördermittel der Verteileinheit in der Höhe verstellbar sind. In einer unteren Hubstellung sind Fördermittel der Längsfördereinheit wirksam, so dass die Gegenstände in Längsrichtung befördert werden. In einer oberen Hubstellung sind nur die Fördermittel der Verteileinheit wirksam, so dass die Gegenstände in Querrichtung befördert werden. Die Verteileinheit ist endseitig der Längsfördereinheit angeordnet, so dass eine Umlenkung der Gepäckstücke lediglich an einem fest vorgegebenen Verteilplatz möglich ist.

Aufgabe der vorliegenden Erfindung ist es daher, eine Fördervorrichtung für Gegenstände derart weiterzubilden, dass auf einfache Weise eine variable und effiziente Richtungsumlenkung von auf einer Förderbahn bewegten Gegenständen ermöglicht wird.

Zur Lösung der Aufgabe ist die Erfindung in Verbindung mit dem Oberbegriff des Patentanspruchs 1 dadurch gekennzeichnet, dass die Verteileinheit einen mit dem Fördermittel derselben versehenen Verteilwagen aufweist, der in der unteren Hubstellung der Verteileinheit entlang einer Verfahrbahn verfahrbar und der in der oberen Hubstellung der Verteileinheit an dem Verteilplatz fixiert angeordnet ist. Nach der Erfindung ist eine Verteileinheit mit einem Verteilwagen vorgesehen, mittels dessen eine Richtungsumlenkung von entlang einer Förderbahn bewegten Gegenständen ortsunabhängig ermöglicht wird. Der Verteilwagen ist vorzugsweise entlang einer geradlinigen Verfahrbahn bewegbar angeordnet und bringt die zur Richtungsumlenkung erforderlichen Fördermittel der Verteileinheit anwendungsabhängig an die Stelle, wo die Richtungsumlenkung gewünscht ist. Grundgedanke der Erfindung ist es, durch Verschiebung derselben Verteileinheit verschiedene Verteilplätze sequentiell bereitzustellen, so dass kostengünstig die Variabilität sowie die Effizienz der Fördervorrichtung gesteigert werden.

Nach einer bevorzugten Ausführungsform der Erfindung weist die Verteileinheit ein Huborgan auf, so dass die Fördermittel der Verteileinheit in einer oberen Hubstellung zumindest teilweise oberhalb von Fördermitteln der Längsfördereinheit und in einer unteren Hubstellung alle unterhalb der Fördermittel der Längsfördereinheit angeordnet sind. Vorteilhaft kann die Verteileinheit in der unteren Hubstellung als räumlich getrennte Einheit relativ zu der Längsfördereinheit bewegt werden, so dass anwendungsabhängig und sequentiell mehrere verteilt angeordnete Verteilplätze zeitweise eingerichtet werden können. Dadurch, dass die Verteileinheit im Wesentlichen als räumlich getrennte Baueinheit ausgebildet ist, kann vorteilhaft eine vorhandene Fördervorrichtung mit der Richtungsumlenkung bewirkenden Verteileinheit nachgerüstet werden.

Nach einer Weiterbildung der Erfindung sind dem Verteilwagen und der Längsfördereinheit jeweils Antriebe derart zugeordnet, dass der Verteilwagen schneller bewegbar ist als die auf den Fördermitteln der Längsfördereinheit bewegten Gegenstände. Vorteilhaft wird auf diese Weise gewährleistet, dass die Übergabe von Gegenständen von einer Längsförderbahn auf unterschiedliche Querförderbahnen kontinuierlich bzw. ohne Zeitverlust erfolgen kann.

Nach einer Weiterbildung der Erfindung sind die Fördermittel der Längsfördereinheit zumindest teilweise beabstandet zueinander angeordnet, so dass ein Zwischenraum gebildet ist, durch den Fördermittel der Verteileinheit in der oberen Hubstellung eingreifen können. Vorteilhaft kann auf diese Weise der von der Längsfördereinheit eingenommene Bauraum auch für die Förderrichtungsumlenkung der Gegenstände genutzt werden.

Nach einer Weiterbildung der Erfindung ist der Verteilwagen der Verteileinheit auf einer in Längsrichtung verlaufenden Schiene verfahrbar angeordnet. Diese Schiene verläuft vorzugsweise in Richtung der Längsfördereinheit, so dass mittels eines einzigen Verteilwagens eine Verteilung der Gegenstände von der Längsförderbahn auf mehrere parallel zueinander verlaufende Querförderbahnen oder vice versa gewährleistet ist.

Nach einer Weiterbildung der Erfindung sind die Fördermittel der Verteileinheit in der oberen Hubstellung in der gleichen Höhe angeordnet wie Fördermittel der Querfördereinheit, so dass sie eine gemeinsame ebene Querförderbahn bilden. Vorteilhaft kann hierdurch die Verteileinheit auch als Überbrückungseinheit genutzt werden, wenn Gegenstände von einer an einer ersten Längsseite der Längsfördereinheit angeordneten ersten Querfördereinheit zu einer an einer gegenüberliegenden Längsseite der Längsfördereinheit angeordneten zweiten Querfördereinheit übergeben werden soll.

Nach einer Weiterbildung der Erfindung ist der dem Fördermittel der Verteileinheit zugeordnete Antrieb als ein Mitnahmeantrieb ausgebildet, der in der oberen Hubstellung an das Fördermittel der Querfördereinheit derart angreift, dass zusätzlich die Fördermittel der benachbarten Querfördereinheit angetrieben werden. Vorteilhaft kann somit der Antrieb zum Antreiben der Fördermittel der Verteileinheit einerseits und zum Antrieb der Querfördereinheit andererseits benutzt werden.

Nach einer Weiterbildung der Erfindung ist eine Fördersteuereinheit zum Ansteuern der Antriebe vorgesehen, so dass das Befördern einer Mehrzahl von Gegenständen entlang einer Längsförderbahn und entlang mehrerer Querförderbahnen mit einem hohen Durchsatz ermöglicht wird.

Nach Patentanspruch 13 ist eine Förderrichtungsumlenkung von auf einer Förderbahn bewegten Gegenständen bestehend aus einer Verteileinheit vorgesehen, so dass eine Nachrüstbarkeit von bereits bestehenden Fördervorrichtungen enthaltend mindestens eine Längsfördereinheit und/oder mindestens eine Querfördereinheit gewährleistet ist. Die Effizienz von vorhandenen Fördervorrichtungen kann somit auf kostengünstige Weise vergrößert werden.

Ein Ausführungsbeispiel der Erfindung wird nachfolgend anhand der Zeichnungen näher erläutert.

Es zeigen:

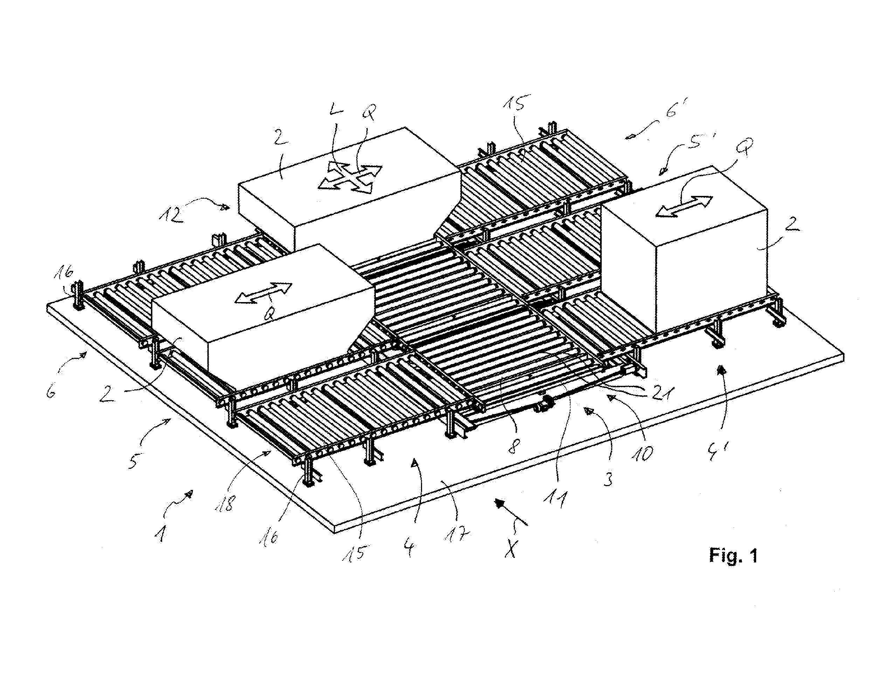

- Figur 1: eine perspektivische Darstellung einer Fördervorrichtung für Gegenstände mit einer einzigen Längsfördereinheit, mit mehreren seitlich von der Längsfördereinheit anschließenden Querfördereinheiten sowie einer sich im Wesentlichen unterhalb der Längsfördereinheit erstreckenden Verteileinheit,
- Figur 2: eine perspektivische Darstellung der Verteilein-heit,

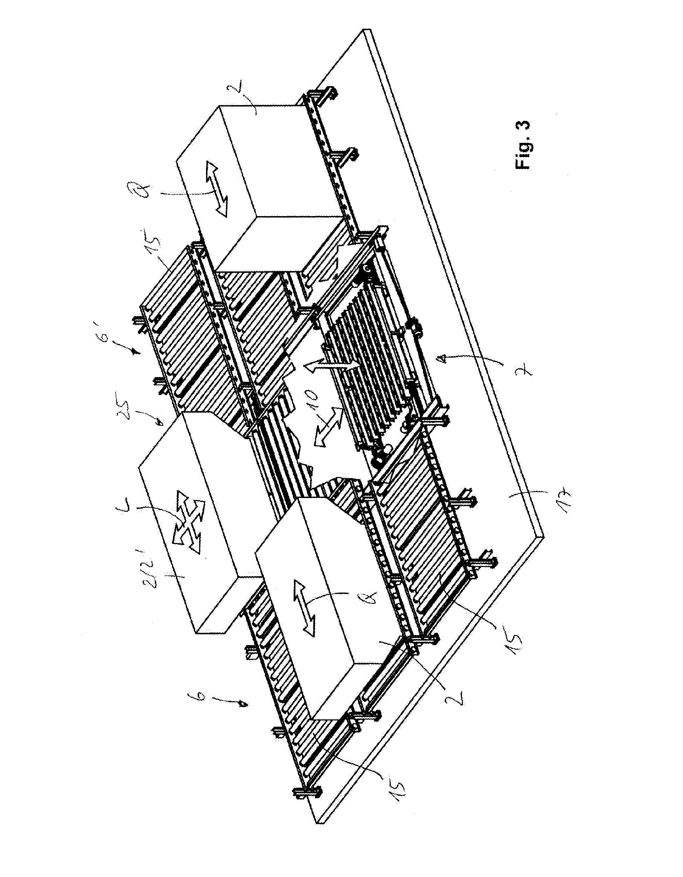

- Figur 3: die perspektivische Darstellung der Fördervorrichtung gemäß Figur 1 mit im Bereich der Verteileinheit ausgebrochener Längsfördereinheit,
- Figur 4a: eine Seitenansicht der Fördervorrichtung gemäß Blickrichtung X in Figur 1 in einer oberen Hubstellung von Fördermitteln der Verteileinheit und
- Figur 4b: eine Seitenansicht der Fördervorrichtung gemäß Blickrichtung X in Figur 1 in einer unteren Hubstellung von Fördermitteln der Verteileinheit.

Eine erfindungsgemäße Fördervorrichtung 1 kann zum Befördern und Verteilen von Gegenständen im Logistikbereich und dergleichen eingesetzt werden. Im vorliegenden Ausführungsbeispiel ist die Fördervorrichtung 1 Bestandteil eines Luftfrachttransportsystems an Flughäfen und ermöglicht das Verteilen von als (Luftfracht-)Container 2 ausgebildeten Gegenständen, in denen jeweils eine Mehrzahl von Luftfrachtgütern, unter anderem Gepäckstücke gesammelt sind. Alternativ können auch Paletten, Gitterboxen und dergleichen durch die Fördervorrichtung 1 transportiert werden.

Die Fördervorrichtung 1 weist im Wesentlichen eine einzige Längsfördereinheit 3 zum Befördern der Container 2 in Längsrichtung L, eine Mehrzahl von Querfördereinheiten 4, 4'; 5, 5'; 6, 6' zum Befördern der Container 2 in Querrichtung Q sowie eine Verteileinheit 7 zur Förderrichtungsumlenkung der Container 2 von der Längsfördereinheit 3 zu einer der Querfördereinheiten 4, 4'; 5, 5'; 6, 6' und/oder von einer der Querfördereinheiten 4, 4'; 5, 5'; 6, 6' zu der Längsfördereinheit 3 und/oder zur geradlinigen Weiterleitung bzw. Übergabe der Container 2 von der Querfördereinheit 4, 5, 6 zu der Querfördereinheit 4', 5', 6' oder umgekehrt.

Die Längsfördereinheit 3 besteht vorzugsweise aus mehreren miteinander verbundenen Baueinheiten, die jeweils unterschiedliche Funktionen aufweisen und unabhängig voneinander ansteuerbar sind. Die Längsfördereinheit 3 ist langgestreckt ausgebildet und weist als Fördermittel eine Mehrzahl von beabstandet zueinander angeordneten Förderrollen 8 auf, die jeweils bewegbar an gegenüberliegenden U-förmigen Profilträgern 9 g elagert sind. Die U-Profilträger 9 erstrecken sich in Längsrichtung L im Bereich von gegenüberliegenden Stirnseiten der Förderrollen 8. Eine gemeinsame Oberseite der Förderrollen 8 bildet eine Längsförderbahn 10 der Längsfördereinheit 3, entlang derer die Container 2 von einem ersten Ende 11 der Längsfördereinheit 3 zu einem zweiten Ende 12 derselben oder umgekehrt beförderbar sind.

Die Förderrollen 8 werden während eines Betriebs der Fördervorrichtung 1 durch einen nicht dargestellten Antrieb (Elektromotor, Getriebe) in Verdrehung um ihre eigene Achse versetzt. Der U-förmige Profilträger 9 ist an einem stirnseitigen Absatz 13 eines Profilträgers 14 der Querfördereinheiten 4, 4'; 5, 5'; 6, 6' befestigt. Die vorzugsweise U-förmigen Profilträger 14 der Querfördereinheiten 4, 4'; 5, 5'; 6, 6' erstrecken sich in Querrichtung Q und nehmen über entsprechende Lager stirnseitig eine Mehrzahl von beabstandet zueinander angeordnete und als Förderrollen 15 ausgebildete Fördermittel der jeweiligen Querfördereinheiten 4, 4'; 5, 5'; 6, 6' auf. Die Profilträger 14 der jeweiligen Querfördereinheiten 4, 4'; 5, 5'; 6, 6' sind über Stützfüße 16 beabstandet zu einem horizontalen Boden 17 angeordnet. Eine Oberseite der Förderrollen 15 bildet eine ebene bzw. horizontale Querförderbahn 18, entlang derer die Container 2 in Querrichtung Q förderbar sind.

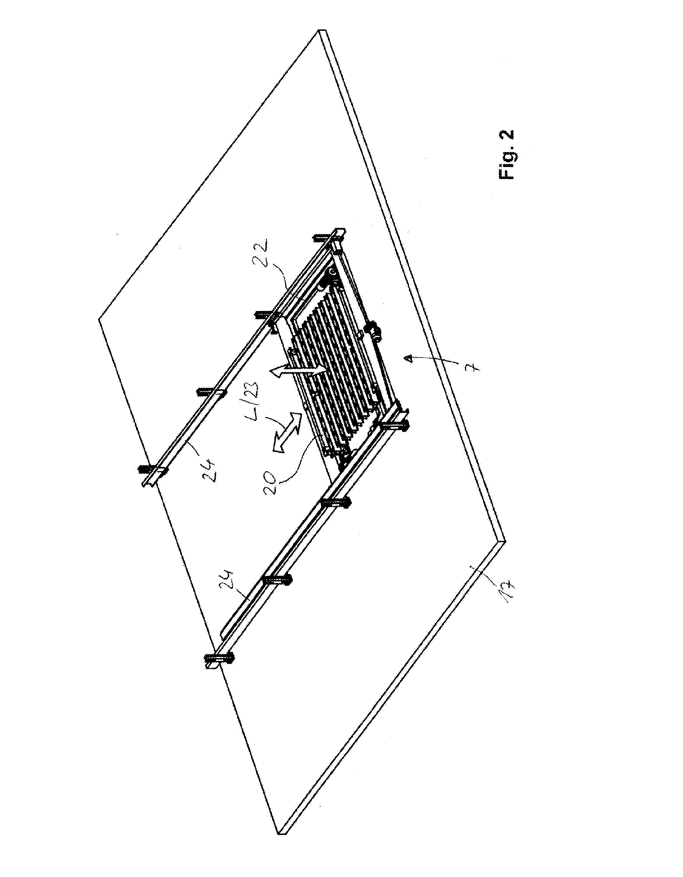

Die Verteileinheit 7 zur Übergabe der Container 2 von der Längsfördereinheit 3 zu einer der Querfördereinheiten 4, 4'; 5, 5'; 6, 6' oder umgekehrt und/oder zur Weiterleitung des Containers 2 von einer der auf einer ersten Randseite der Längsfördereinheit 3 angeordneten Querfördereinheiten 4, 5, 6, zu der auf der gegenüberliegenden Randseite der Längsfördereinheit 3 angeordneten Querfördereinheiten 4', 5', 6' oder umgekehrt erstreckt sich im Wesentlichen unterhalb der Längsfördereinheit 3. Wie insbesondere aus Figur 2 ersichtlich ist, weist die Verteileinheit 7 eine Mehrzahl von jeweils in Querrichtung Q verlaufende Reihen von Fördermittel auf, die jeweils als Förderrollen 19 ausgebildet sind. Die Reihen von Förderrollen 19 sind seitlich begrenzt durch in Querrichtung Q verlaufende aufrechte Tragleisten 20. Der Abstand benachbarter Reihen von Förderrollen 19 bzw. der Tragleisten 20 ist größer als der Durchmesser der Förderrollen 8 der Längsfördereinheit 3. Ein Zwischenraum 21 zwischen benachbarten Förderrollen 8 der Längsfördereinheit 3 ist größer als die Breite einer Reihe von Fördermitteln 19 der Verteileinheit 7. Hierdurch ist sichergestellt, dass die Reihen von Förderrollen 19 in einer oberen Hubposition der Verteileinheit 7 durch den zwischen zwei benachbarter Förderrollen 8 der Längsfördereinheit 3 gebildeten Zwischenraum 21 (Schlitz) hindurchbewegbar sind.

Ferner weist die Verteileinheit 7 einen Verteilwagen 22 auf, mittels dessen die Fördermittel 19 der Verteileinheit 7 entlang einer Verfahrbahn 23 linear beweglich ist. Die Verfahrbahn 23 erstreckt sich in Längsrichtung L. Zum Verfahren des Verteilwagens 22 entlang der Verfahrbahn 23 sind zwei langgestreckte Schienen 24 vorgesehen, die sich von dem ersten Stirnende 11 der Längsfördereinheit 3 zu dem gegenüberliegenden zweiten Stirnende 12 der Längsfördereinheit 3 erstrecken. Ein nicht dargestellter Antrieb (Elektromotor) ist vorgesehen, damit der Verteilwagen 22 entlang der Schienen 24 zu einem vorgesehenen Verteilplatz 25 verschiebbar ist.

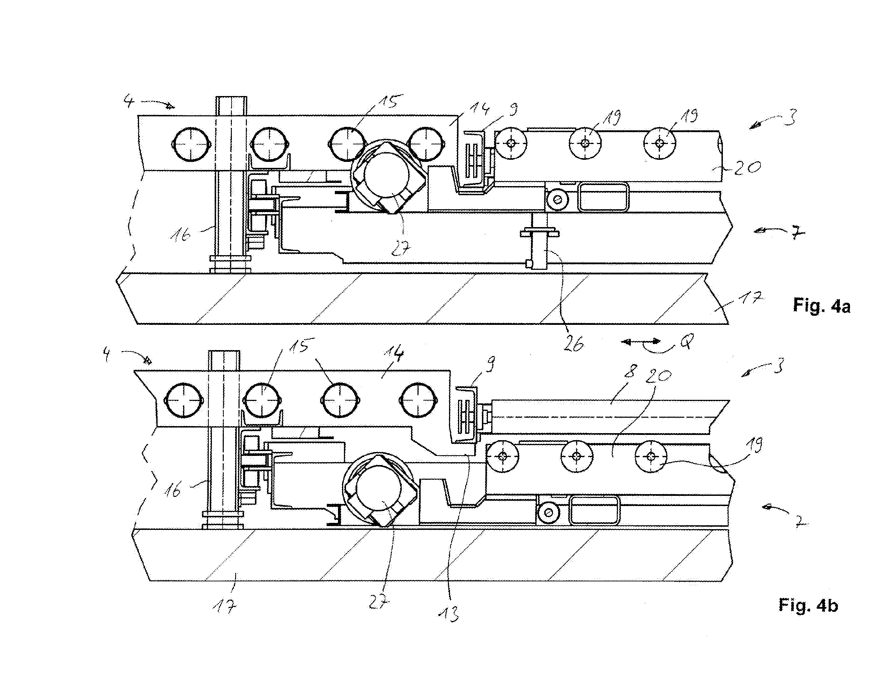

Ferner weist die Verteileinheit 7 ein Huborgan 26 auf, mittels dessen die auf einem gemeinsamen Rahmen angeordneten Fördermittel 19 der Verteileinheit 7 gleichzeitig von der unteren Hubstellung, in der die Fördermittel 19 alle unterhalb der Förderrollen 8 der Längsfördereinheit 3 angeordnet sind, in eine den Container 2 erfassenden oberen Hubstellung verbringbar sind. Wie besser aus Figur 4a und 4b ersichtlich ist, befinden sich die Fördermittel 19 in der oberen Hubstellung alle oberhalb der Förderrollen 8, so dass nicht die Fördermittel 8 der Längsfördereinheit 3, sondern die Fördermittel 19 der Verteileinheit 7 wirksam sind. Da die Fördermittel 19 so ausgebildet sind, dass sie eine Bewegung des Containers 2 in Querrichtung Q bewirken, kann nun beispielsweise ein an dem Verteilplatz 25 angeordneter Container 2' von der Längsfördereinheit 3 zu der Querfördereinheit 6 oder 6' übergeben werden. Zu diesem Zweck weist die Verteileinheit 7 einen Antrieb 27 auf, der bei Betrieb in einer ersten Drehrichtung den Container 2 in Richtung der Querfördereinheit 6 und bei einer entgegengesetzten zweiten Drehrichtung den Container 2 in Richtung der Querfördereinheit 6' bewegt. Die Querfördereinheit 6' ist auf einer zu der Querfördereinheit 6 gegenüberliegenden Längsseite der Längsfördereinheit 3 angeordnet.

Alternativ können statt aller Fördermitteln 19 auch nur ein Teil der Fördermittel 19 in vertikaler Richtung von der unteren Hubstellung in die obere Hubstellung verbracht werden, in der sie die Bewegung des Containers 2 in die Querrichtung Q bewirken.

Wie besser aus den Figuren 4a und 4b ersichtlich ist, ist der Antrieb 27 als ein Mitnahmeantrieb, insbesondere als ein Reibradantrieb 27 ausgebildet, der in der oberen Hubstellung in Fördermittel 15 der Querfördereinheiten eingreift, so dass zusätzlich diese Fördermittel 15 in der entsprechend vorgesehenen Drehrichtung angetrieben werden. Der Container 2' kann somit nicht nur an die entsprechende Querfördereinheit 6, 6' übergeben, sondern darüber hinaus auch der Transport auf der entsprechenden Querförderbahn bewirkt werden. Zur Ansteuerung der Antriebe für die Längsfördereinheit 3 und die Verteileinheit 7 ist eine nicht dargestellte Fördersteuereinheit vorgesehen, die die Antriebe derart ansteuert, dass eine Anzahl von in einem Mindestabstand zueinander angeordneten Containern 2 kontinuierlich von der Längsfördereinheit 3 an eine der Querfördereinheiten 4, 4'; 5, 5'; 6, 6' oder umgekehrt übergeben werden kann. Somit wird der Verteilwagen 22 in der Regel schneller von dem einem Verteilplatz 25 zu dem nächsten Verteilplatz 25 bewegt als der entsprechende Container 2 zwischen diesen Verteilplätzen 25.

Das Huborgan 26 kann hydraulisch oder mechanisch betreibbar sein.

Die Fördermittel 8, 15, 19 können alternativ auch als Gurt- und/oder Ketten- und/oder als Bandförderer ausgebildet sein.

Die Erfindung ermöglicht die Bewegung von Containern 2, 2' vorzugsweise in einer horizontalen Ebene, wobei der Verteilwagen 22 lediglich in einer linearen Richtung bewegbar angeordnet ist. Hierdurch wird ein Verteilen bzw. Bewegen der Container 2 in einer horizontalen Ebene zur Förderrichtungsumlenkung in Längsrichtung L und in Querrichtung Q ermöglicht. Gegebenenfalls kann die Fördervorrichtung 1 auch mehrere Verteileinheiten 7 aufweisen, die parallel und/oder senkrecht zueinander verlaufen. Dies ist abhängig von der jeweils gewünschten Förderanwendung.

## Patentansprüche

1. Fördervorrichtung (1) für Gegenstände, insbesondere für (Luftfracht-)Container (2), mit einer Längsfördereinheit (3) zum Fördern der Gegenstände in Längsrichtung (L) auf einer Längsförderbahn, mit einer Verteileinheit (7) zur Umlenkung der Gegenstände von der Längsförderbahn auf eine quer zur Längsförderbahn verlaufende Querförderbahn, wobei die Verteileinheit (7) ein senkrecht zur Längsrichtung (L) und senkrecht zur Querrichtung (Q) verfahrbares Huborgan (26) aufweist, das auf Fördermittel (19) der Verteileinheit (7) derart einwirkt, dass der Gegenstand an einem Verteilplatz (25) in einer unteren Hubstellung in Längsrichtung (L) und in einer oberen Hubstellung in Querrichtung (Q) förderbar ist, **dadurch gekennzeichnet, dass** die Verteileinheit (7) einen mit dem Fördermittel (19) derselben versehenen Verteilwagen (22) aufweist, der in der unteren Hubstellung der Verteileinheit (7) entlang einer Verfahrbahn (23) verfahrbar und der in der oberen Hubstellung der Verteileinheit (7) an dem Verteilplatz (25) fixiert angeordnet ist.

2. Fördervorrichtung nach Anspruch 1, **dadurch gekennzeichnet, dass** das Huborgan (26) derart ausgebildet ist, dass die Fördermittel (19) der Verteileinheit (7) in der oberen Hubstellung oberhalb von Fördermitteln (8) der Längsfördereinheit (3) und in der unteren Hubstellung unterhalb der Fördermittel (8) der Längsfördereinheit (3) angeordnet sind.

3. Fördervorrichtung nach Anspruch 1 oder 2, **dadurch gekennzeichnet, dass** dem Verteilwagen (22) und der Längsfördereinheit (3) jeweils zueinander abgestimmte Antriebe zugeordnet sind, so dass eine Anzahl von in einem vorgegebenen Mindestabstand zueinander auf der Längsförderbahn (10) bewegte Gegenstände (2, 2') kontinuierlich an den jeweiligen Verteilplätzen (25) in Querrichtung (Q) umlenkbar sind.

4. Fördervorrichtung nach einem der Ansprüche 1 bis 3, **dadurch gekennzeichnet, dass** die Fördermittel (8) der Längsfördereinheit (3) zumindest teilweise beabstandet zueinander angeordnet sind unter Bildung eines Zwischenraumes (21), durch den die Fördermittel (19) der Verteileinheit (7) von der unteren in die obere Hubstellung bewegbar sind.

5. Fördervorrichtung nach einem der Ansprüche 1 bis 4, **dadurch gekennzeichnet, dass** der Verteilwagen (22) auf einer in Längsrichtung (L) verlaufenden Schiene (24) linear verfahrbar angeordnet ist.

6. Fördervorrichtung nach einem der Ansprüche 1 bis 5, **dadurch gekennzeichnet, dass** die Verteileinheit (7) in der unteren Hubstellung unterhalb der Längsfördereinheit (3) und/oder der Fördermittel (8) der Längsfördereinheit (3) angeordnet ist.

7. Fördervorrichtung nach einem der Ansprüche 1 bis 6, **dadurch gekennzeichnet, dass** sich an einer Randseite der Längsfördereinheit (3) mindestens eine Querfördereinheit (4, 4'; 5, 5'; 6, 6') anschließt zum Fördern der Gegenstände (3, 3') entlang einer in Querrichtung (Q) verlaufenden Querförderbahn (18).

8. Fördervorrichtung nach einem der Ansprüche 1 bis 7, **dadurch gekennzeichnet, dass** in der oberen Hubstellung der Verteileinheit (7) die Fördermittel (19) derselben in einer solchen Höhe angeordnet sind, dass sie zusammen mit den Fördermitteln (15) der benachbarten Querfördereinheit (4, 4'; 5, 5'; 6, 6') eine gemeinsame ebene Querförderbahn (18) bilden.

9. Fördervorrichtung nach einem der Ansprüche 1 bis 8, **dadurch gekennzeichnet, dass** ein die Fördermittel (19) der Verteileinheit (7) antreibbarer Antrieb als ein Mitnahmeantrieb (27) ausgebildet ist, der in der oberen Hubstellung in die Fördermittel (15) der Querfördereinheit (4, 4'; 5, 5'; 6, 6') zum Antrieb derselben eingreift.

10. Fördervorrichtung nach einem der Ansprüche 1 bis 9, **dadurch gekennzeichnet, dass** die Fördermittel (8, 15, 19) der Längsfördereinheit (3) und/oder der Querfördereinheit (4, 4'; 5, 5'; 6, 6') und/oder der Verteileinheit (7) als Rollen- und/oder Rad- und/oder Gurt- und/oder Ketten- und/oder Bandförderer ausgebildet sind.

11. Fördervorrichtung nach einem der Ansprüche 1 bis 10, **dadurch gekennzeichnet, dass** das Huborgan (26) hydraulisch und/oder mechanisch betreibbar ist.

12. Fördervorrichtung nach einem der Ansprüche 1 bis 11, **dadurch gekennzeichnet, dass** eine Fördersteuereinheit zum Ansteuern von einem der Längsfördereinheit (3) und/oder der Querfördereinheit (4, 4'; 5, 5'; 6, 6') und/oder der Verteileinheit (7) zugeordneten Antrieb vorgesehen ist.

13. Förderrichtungsumlenkung von auf einer Förderbahn (10, 18) bewegten Gegenständen (2, 2') mit einer Verteileinheit (7) nach einem der Ansprüche 1 bis 12.
